# EUROPEAN PATENT APPLICATION

(11) **EP 4 520 610 A1**
(43) Date of publication of application: **12.03.2025**
(21) Application number: 24167463.9
(22) Date of filing: 28.03.2024
(51) Int. Cl.: B60W 60/00, B60W 50/00

(54) **VEHICLE, APPARATUS, DATA CARRIER, COMPUTER PROGRAM, AND METHOD FOR MOTION PLANNING OF A VEHICLE**

(30) Priority: 07.09.2023 EP 23195990
(71) Applicant: Continental Automotive Technologies GmbH, 30175 Hannover (DE)
(72) Inventor: Bouzidi, Mohamed-Khalil, 30175 Hannover (DE); Reichardt, Jörg, 30175 Hannover (DE); Yao, Yue, 30165 Hannover (DE)
(74) Representative: Continental Corporation

(57) **Abstract**

Embodiments of the present disclosure relate to a vehicle, an apparatus, a data carrier, a computer program, and a method for motion planning of a vehicle. In particular, the concept proposed herein relates to an approach for an improved warm start for optimization in motion planning. The method comprises multiple steps by the vehicle. Those steps include obtaining one or more trajectory candidates of different homotopy classes. The trajectory candidates of the same homotopy class can be transformed into each other without intersecting an obstacle. Further, the steps include obtaining an optimization result for the homotopy classes based on respective one or more trajectory candidates and selecting an optimization result from the optimization results of the different homotopy classes for maneuvering the vehicle.

## Description

Embodiments of the present disclosure relate to a vehicle, an apparatus, a data carrier, a computer program, and a method for motion planning of a vehicle. In particular, the concept proposed herein relates to an approach for an improved warm start for optimization in motion planning.

Motion planning may be applied in various applications and fields of technology. For example, it may be applied in robotics and/or automotive applications, e.g., for trajectory planning.

A goal of trajectory planning is to plan an appropriate behavior of an autonomous vehicle considering comfort, safety (collision-free), and dynamic feasibility (i.e., can be followed by the vehicle). Model predictive control (MPC) is gaining increasing popularity in this field due to its inherent ability to consider collision constraints, dynamic feasibility, actuator constraints, and comfort conditions, enabling the generation of optimal trajectories. One variant of MPC is called Model Predictive Contouring Control (MPCC). MPCC includes coupling lateral and longitudinal dynamics, which enables consistent lateral and longitudinal references to be generated and does not require a separate velocity specification.

To calculate a trajectory using MPC, an optimization problem is solved by a local optimizer at subsequent timesteps (in real-time). Such optimization problems are generally non-convex in the presence of traffic participants. Local Optimizers / MPC inherently have certain weaknesses that come to the fore especially in the use case of autonomous driving in challenging scenarios. Local optimizers require an initial guess from which a gradient descent is performed. If this is too far from the optimum, many steps are necessary until it converges, or it may not converge at all. In a non-convex problem, the solver can also converge to an undesired local optimum if this initial guess is too close. One idea of MPC is to provide an initial guess (so-called "warmstarting") for the optimization. To this end, e.g., the optimal trajectory, which was calculated in the last timestep, is used, assuming little change between the previous and current time step. However, this may fail in uncertain and rapidly changing environments where the optimization problem can change a lot between each timestep. For instance, due to unknown intentions of human drivers, predictions of how traffic participants act can vary significantly between timesteps. These abrupt changes can lead the optimizer to struggle to recover or find a proper solution in time, potentially resulting in undesired behavior.

In the event of optimizer failure, a common approach is to use the same trajectory as in the last timestep. However, when the environment is changing rapidly, the scene can change even more in the time step after and using the solution of two timesteps before can exacerbate the problem. Another way of addressing this issue is to use a backup planner which handles worst case scenarios and thus leads to conservative (not so much desired) behavior.

A second problem regarding any local optimizer is that it is only able to find a local optimum depending on where the initial guess is. This is especially problematic in dense traffic with a lot of (moving) obstacles. Obstacles are the cause for the optimization problem to be nonconvex with multiple local minima. Some local optima lead to undesired behavior, such as overly conservative behavior or peculiar overtaking maneuvers. This problem is usually solved by decomposing the planning problem into a global and a local planner. In this setup, a global planner (often using sampling-based approaches like A* or RRT) generates a rough trajectory with significant simplifications, which is then "smoothed" by a local planner, e.g., MPC. By simplifying the problem in the global planner, the solution space is reduced. For instance, the vehicle kinematics and the constraints of the vehicle are generally neglected in the global planning phase. Due to this limitation, the planning module could output a trajectory which is not optimal. Besides, this architecture also does not address the previously mentioned weakness of conventional warmstarting in fast-changing environments.

Initial attempts to address the weaknesses of a local optimizer involve a learning-based approach for warmstarting using LSTM, GMM, or kNN. However, these approaches are mainly designed for very simple problems. For example, they do not consider constraints, especially those related to moving obstacles, or are trained for a limited number of self-generated scenarios.

So, drawbacks of motion planning concepts may be summarized as follows:
- They are subject to failures in finding a safe/optimal trajectory (in time) in uncertain fast changing environments because the initial guess for the optimizer (solution from the last time step) is too far from the optimum.
- They may converge to undesired local optimum especially in dense traffic due to the nonconvexity of the optimization problem.
- For some learning-based warm start methods, only simple examples are considered e.g., they cannot handle moving obstacles etc. Also, no dataset is available with optimal trajectories as ground truth, even if we generate this dataset synthetically in the size of the Argoverse dataset or Waymo dataset to consider enough scenarios we need to regenerate and retrain the model each time we change the MPC components, e.g., weights of the objective function.

Hence, there may be a demand for an improved concept for motion planning.

This demand may be satisfied by the subject matter of the appended independent claims. Advantageous embodiments thereof are disclosed by the appended dependent claims.

In particular, the present disclosure provides an approach addressing the above drawbacks of motion planning concepts.

Embodiments of the present disclosure provide a method for motion planning of a vehicle. The method comprises multiple steps by the vehicle. Those steps include obtaining one or more trajectory candidates of different homotopy classes. The trajectory candidates of the same homotopy class can be transformed into each other without intersecting an obstacle. Further, the steps include obtaining an optimization result for the homotopy classes based on respective one or more trajectory candidates and selecting an optimization result from the optimization results of the different homotopy classes for maneuvering the vehicle. In doing so, one or more of the above-mentioned drawbacks may be solved and/or mitigated.

In some embodiments, e.g., applications involving warm starting, the method further comprises, using the selected optimization result in a subsequent optimization as initial data for warm-starting. In doing so, the selected optimization result may lead to better results of the subsequent optimization learning other motion planning or warm starting concepts.

In some embodiments, obtaining the one or more trajectory candidates of different homotopy classes comprises obtaining at least one trajectory candidate for the different homotopy classes and generating for the different homotopy classes, based on the trajectory candidate, further trajectory candidates of the same homotopy class. In this way, a plurality of trajectory candidates of the same homotopy class are considered, thereby avoiding that the optimization result converges to a local minimum.

Obtaining the at least one trajectory candidate may comprise obtaining waypoints (of the trajectory candidates) from a multimodal motion predictor for the different homotopy classes. Further, obtaining the trajectory candidate may comprise fitting a Bezier curve on the waypoints for the different homotopy classes, obtaining a covariance of the Bezier curve, and generating the at least one trajectory candidate based on the Bezier curve and its covariance. The skilled person having benefit from the present disclosure will appreciate that the proposed fitted Bezier curve allows a more resource-saving computation than, e.g., using waypoints.

In some implementations of the proposed approach obtaining the optimization result for the different homotopy classes comprises obtaining for the different homotopy classes an average of the respective trajectory candidates, applying an optimization to the average trajectory candidate to obtain the optimization result and determining an objective function value of the average.

Accordingly, selecting the optimization result may comprise selecting the optimization result based on the objective function values of the optimization results of the different homotopy classes. In this way, an appropriate optimization result, e.g., leading to a global minimum or at least a desirable optimization result, may be selected.

The skilled person will appreciate, that the trajectory candidates may be generated automatically, e.g., using a machine-learning-based model.

For example, obtaining one or more trajectory candidates of different homotopy classes may comprise using a machine-learning-based predictor trained, based on real-world or synthetic training data, to generate the one or more trajectory candidates. In this way, no or at least less user input may be required.

Further embodiments provide a computer program comprising instructions which, when the computer program is executed by a computer, cause the computer to carry out an embodiment of the proposed method.

Other embodiments provide a computer-readable data carrier having stored thereon such a computer program.

Further embodiments provide an apparatus comprising one or more interfaces for communication and a data processing circuit configured to execute an embodiment of the proposed method.

Other embodiments provide a vehicle comprising such an apparatus.

Further, embodiments are now described with reference to the attached drawings. It should be noted that the embodiments illustrated by the referenced drawings show merely optional embodiments as an example and that the scope of the present disclosure is by no means limited to the embodiments presented:

### Brief description of the drawings

Fig. 1 shows a flow chart schematically illustrating an embodiment of a method;
Fig. 2 shows a flow chart schematically illustrating an embodiment reusing a multimodal motion predictor for predicting the motion of other traffic participants; and
Fig. 3 shows a block diagram schematically illustrating an apparatus in accordance with the proposed approach.

Motion planning may be applied in various applications, e.g., assisted/autonomous driving, robotics, etc.. In practice, this may involve an optimization problem, for example, for determining a (ideally optimal) trajectory for a vehicle or a robot. However, the optimization may result in local optima which lead to suboptimal trajectories, especially, in rapidly changing environments, e.g., dense traffic. This may lead to undesired driving behavior.

Embodiments of the approach proposed herein are based on the finding that obstacles can be the cause for the existence of multiple minima in the optimization problem. From analyzing multimodal predictions, it turned out that different modes (predictions) of a predictor, e.g., different lane decisions for passing another vehicle often correspond to different homotopy classes. The predictor may be a machine-learning-based algorithm which may be trained based on real-world or synthetic training data to generate the one or more trajectory candidates.

One idea of the proposed solution is to use this knowledge to retrieve different local optima and compare them to each other. By leveraging the multimodal predictions of the predictor, one can identify multiple local minima of an optimization for motion planning using the theory of homotopy classes.

So, in other words, a basic idea of the proposed approach is to check and/or compare alternative initial guesses for the optimization which represent different ways of handling the occurrence of an obstacle (e.g., another traffic participant, a construction site or any other obstacle which may occur in traffic), e.g., different paths for passing the obstacle. In doing so, a better optimization result may be achieved. Embodiments of the present disclosure are further based on the finding that different alternative ways of handling situations where a vehicle encounters an obstacle may be represented by different homotopy classes, as laid out in more detail later.

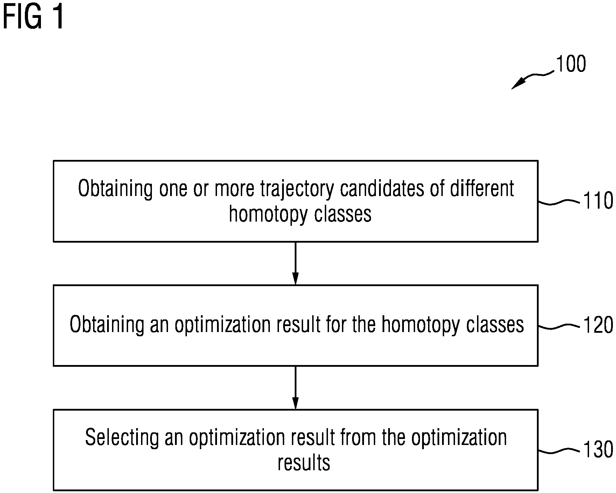

More details and features of embodiments are described below with reference to Fig. 1 which shows a flow chart schematically illustrating an embodiment of a method 100 for motion planning of a vehicle.

The method 100 may be executed by a vehicle (ego-vehicle). Accordingly, steps of the method 100 may be executed by the vehicle.

In practice, the motion planning involves solving an optimization problem resulting in a trajectory for the vehicle. Steps of method 100 include 110 obtaining one or more trajectory candidates (also referred to herein as "samples") of different homotopy classes (as input).

The trajectory candidates can be understood as alternative optional trajectories for the vehicle and serve as input to an optimization for determining a trajectory for the vehicle.

Two continuous functions from one topological space to another are called homotopic if one can be "continuously deformed" into the other. The skilled person understands that trajectories of vehicles only may be continuously deformed into each other if no obstacle is in the way, i.e., between the trajectories. Accordingly, in context of the present disclosure, trajectory candidates of the same homotopy class can be transformed ("continuously deformed") into each other without intersecting an obstacle. Vice versa, trajectory candidates of different homotopy classes cannot be continuously deformed into each other without intersecting an obstacle.

In practice, e.g., trajectory candidates passing an obstacle on the same side may be considered as trajectory candidates of the same homotopy class. Vice versa, trajectory candidates passing the obstacle on different sides may be considered as trajectory candidates of different homotopy classes.

It is proposed to use an AI Model to provide the initial guess (i.e., the trajectory candidates) to a Model Predictive Control for global+local Trajectory Planning in uncertain fast changing environments with dense traffic. As the Trajectory Planner, it is proposed to use "Model Predictive Contouring Control" and to consider moving obstacles using the so-called "Potential Field Method".

A skilled person having benefit from the present disclosure will appreciate that a Motion Transformer (MTR) which may be used for predicting trajectories of other traffic participants may be (re-)used to obtain the trajectory candidates. The MTR (Multiagent, Multimodal Motion Predictor) is capable of predicting future waypoints (x, y coordinates) of traffic participants and/or the trajectory candidates within a given prediction horizon. It utilizes a Gaussian Mixture Model to forecast several possible (multimodal) trajectories, along with providing Gaussian parameters (µx, µy, ox, oy, p) for each timestep and predicted mode. The skilled person will appreciate that the re-use of the MTR avoids that a separate software is necessary.

Method 100 further suggests obtaining 120 an (expected) optimization result for the homotopy classes based on respective one or more trajectory candidates. So, if multiple trajectory candidates belong to the same homotopy class, e.g., the optimization is executed based on an average of the respective trajectory candidates of this homotopy class, as laid out in more detail later.

For the optimization, e.g., Model Predictive Control for global and local Trajectory Planning may be used, as mentioned earlier. With a system model, a prediction horizon, a cost function, and constraints defined, MPC solves an optimization problem at each time step to determine the optimal control inputs for the current state of the vehicle. For this, various optimization algorithms can be used, such as quadratic programming (QP), nonlinear programming (NLP), or convex optimization methods. These algorithms aim to minimize the cost function while satisfying the system dynamics and constraints.

Further, method 100 comprises selecting 130 an optimization result from the optimization results of the different homotopy classes for maneuvering the vehicle. In doing so, e.g., (considering the traffic environment of the vehicle) a favorable or the best optimization result (optimized trajectory) is selected. For this, a predefined metric or indicator may be used to evaluate a quality of the optimization results. In practice, optimization results providing a more comfortable, efficient, and/or safe driving behavior may be considered more favorable than other optimization results. For example, an optimized trajectory passing the obstacle with (approximately) constant speed may be more comfortable and therefore considered more favorable than an optimized trajectory requiring the vehicle to brake or accelerate (heavily).

According to some embodiments of the method 100, the selected optimization result, then, may be used as initial data for warm-starting in motion planning (for the vehicle). In applications, the selected optimization result, e.g., is used as initial guess for another optimization for motion planning. In practice, the optimization result, e.g., may be used for "warmstarting" the MPC.

The resulting trajectory, then, may be used in an (semi-) autonomous driving system and/or assisted driving system for maneuvering the vehicle. As the skilled person will appreciate, the use of trajectory candidates of multiple homotopy classes may avoid sub-optimal local minima leading to undesired driving behavior. So, the proposed approach may achieve a more favorable driving behavior, e.g., a more comfortable and/or safe driving behavior of the vehicle.

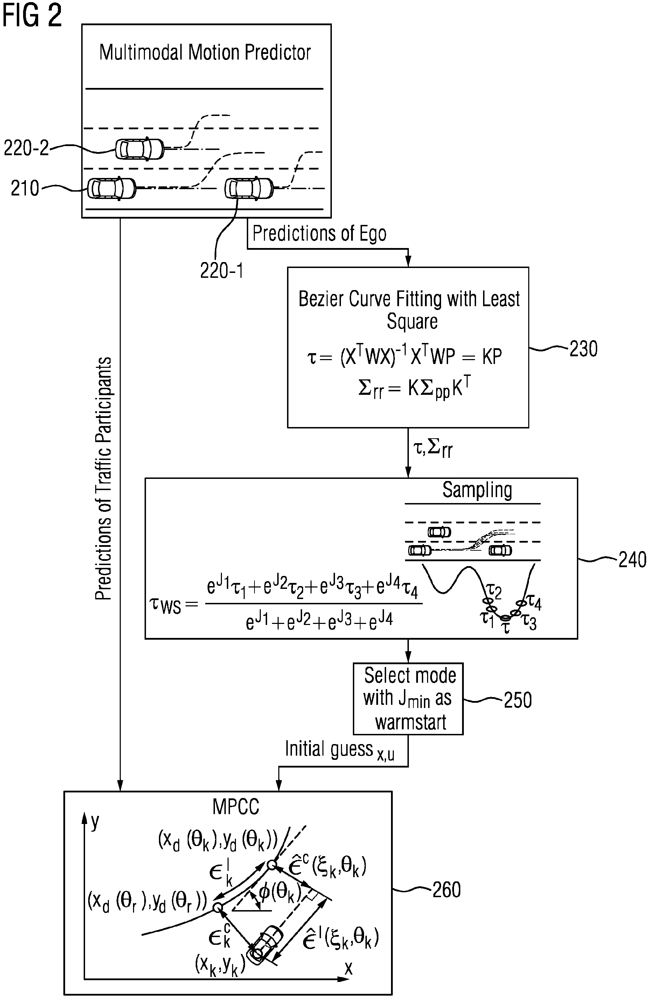

Further details and features are outlined below with reference to Fig. 2 which shows a flow chart schematically illustrating another embodiment of the proposed approach.

The flow chart particularly indicates an exemplary use case of the proposed approach. The shown use case relates to a traffic scene including multiple vehicles 210, 220-1, and 220-2. The following explanations relate to the shown traffic scene/situation and the case that vehicle 210 applies an embodiment of the proposed approach. So, the vehicle 210 can be seen as ego-vehicle and the vehicles 220-1 and 220-2 as obstacles or other traffic participants from the perspective of the ego-vehicle. However, the skilled person will appreciate that the proposed approach may be also applied in other traffic situations as well as in other vehicles, e.g., 220-1 and 220-2 as well.

As can be seen from the illustration of the traffic scene, the multimodal motion predictor may determine motion predictions represented by dotted lines. As can be seen, the predictions represent different trajectories which may belong to different modes, e.g., different ways to handle the traffic situation. In the present case, the vehicles optionally change or stay on the lane.

The predictions for the vehicles 220-1 and 220-2 are provided to an MPC 260 for the ego-vehicle to consider multiple possible trajectories of the other traffic participants when planning the trajectory of the ego-vehicle 210.

In accordance with the proposed approach, the predictions for the ego-vehicle 210 are used as trajectory candidates. As mentioned above, the different trajectory candidates (stay or change lane) for vehicle 210 may belong to different homotopy classes. So, applying the proposed approach, the trajectory candidates of the different homotopy classes are compared to each other for determining a favorable or optimal initial data/guess for warmstarting the MPC 260.

In some applications, even if the predictor outputs the corresponding homotopy class, the predictions could still be far from the optimum, resulting in many steps and prolonged convergence time for solving the optimization problem. It is therefore proposed to not solely rely on the predictor's output to calculate states of the ego-vehicle and determine the initial data/guess for warmstarting the MPC.

So, if a homotopy class only includes one or few trajectory candidates, embodiments of the proposed approach, therefore, suggest generating for the different homotopy classes, based on the trajectory candidates, further trajectory candidates of the same homotopy class. For this, the proposed method takes one or more trajectory candidates of a homotopy class and samples around it more trajectory candidates. For this, waypoints of the trajectory candidates are obtained from the multimodal motion predictor (for the different homotopy classes). Then, a Bezier curve is fitted on the waypoints for the different homotopy classes (see step 230) and a covariance of the Bezier curve is obtained. For this, it is proposed to fit the waypoints of the predictor into a Bezier Curve for each mode using, e.g., Least Square Regression. A predicted variance for each waypoint is used to calculate the covariance of a respective Bezier control point of the waypoint. In another step (see 240), further samples of trajectory candidates are generated based on the Bezier curve and its covariance.

In practice, e.g., further trajectory candidates are sampled within the covariance around the Bezier curve. With the Bezier control points and the covariance, it is proposed to sample more Bezier curves and calculate a weighted average of the control points as described before. In doing so, the variance of each Gaussian component of the GMM (i.e. respective mode/homotopy class) is considered. This means that it is assumed that the sampling is around a convex region. With this, it may be ensured that an objective function value of the weighted average is bounded to be at least as good as the samples. Provided the set of samples is well-distributed around the convex region, it is feasible for the weighted average to approach the optimum solution closely.

In this process, the Bezier approximation is utilized to calculate the subsequent states and control inputs (such as velocity, yaw angle, acceleration, steering angle, etc.) of the MPC model, from which the objective function value is derived. The objective function may comprise one or more metrics and may consider one or more objectives such as:
- Maximize progress on reference path (e.g. road)
- Minimize deviation from a planned path
- Maximize distance to obstacles
- Minimize lateral and longitudinal jerk and acceleration for comfortable driving

This approach is chosen because derivatives of a Bezier Curve can be readily computed in closed-form, eliminating the need for numerical inference from the waypoints. Moreover, Bezier Curves of degree 5 represent the optimal solutions in terms of travel time, control effort, and jerk. This property proves advantageous both for sampling the control points and obtaining the states and control inputs. It is noted that, in some embodiments, also a different degree of Bezier curves may be used.

It should be noted that by employing parallelization techniques, the sampling step can be streamlined, fostering a more efficient processing workflow.

The skilled person will appreciate that the use of Bezier curves and the homotopy classes allow that far fewer samples and only one iteration step is applied in contrast to other approaches.

Then, a quality of the homotopy classes for warmstarting the MPC 260 is determined. For this, an expected quality of an MPC result is determined for the different homotopy classes. To this end, an average of the respective trajectory candidates of a homotopy classes is determined and the optimization is applied to the average trajectory candidate to obtain the optimization result. For this, the objective function is applied to the trajectory candidates. Then a weighted average of the trajectory candidates is calculated to get a trajectory which is closer to the minimum. In doing so, the objective function values of the trajectory candidates are used as the weights when determining the weighted average.

After this step the solutions of each mode/homotopy class and the optimal solution of the MPC of the last time step are compared and the best one in terms of objective function value (corresponding to the best local optimum found) is selected (see step) as initial guess/data for a warmstart for the MPC. The MPC then further optimizes this input and outputs a trajectory which satisfies predefined constraints (no collision with other traffic participants, actuator constraints, road boundary constraints, kinematic constraints) and optimality conditions (e.g., that an optimal solution is found). In practice, the optimality conditions are met if the Karush-Kuhn-Tucker conditions are fulfilled (gradient is zero, or the like).

In doing so, considering different homotopy classes may avoid that the optimization of the MPC leads to a sub-optimal local minimum which leads to unfavorable driving behavior of the vehicle. So, the selected homotopy class or a trajectory of the selected homotopy class (see above) may lead to a more favorable optimization result leading a more favorable (safer, more comfortable, more predictable, more efficient) driving behavior.

To summarize, one aspect of the proposed approach lies in its utilization of a learning-based, multimodal predictor for warm starting. By refining the predictor output by combining the idea of Model Predictive Path Integral Control and the theory of Homotopy classes, an efficient trajectory planner based on Model Predictive Contouring Control is introduced to deal with challenging, fast-changing traffic scenarios.

Further advantages are as follows:
- The proposed method can exploit the strengths of learning-based methods without losing the safety guarantees and constraint considerations of the MPC.
- The Bezier curve approximation and the use of multimodal trajectories leads to fewer samples and higher efficiency compared to the Model Predictive Path Integral Control.
- It also does not restrict the planner's behavior if the predictor outputs an unsafe trajectory; the MPC can still modify the input and converge to a safe solution (unlike other learning-based MPC approaches or to approaches decomposing into global and local planners).
- This method can be easily deployed since it does not need an implementation and training of an own AI Model for providing an efficient initial guess because it can use a State-of-the-Art Predictor which may be already implemented for traffic participant prediction.
- This also means that the proposed approach is time efficient since it uses the same model which is anyways used for the prediction of the traffic participants. The Processing steps afterwards do not need heavy computations and are suited for parallelization
- The proposed method is model agnostic, i.e., the Prediction module can be exchanged.
- In contrast to other learning-based methods, the proposed approach does not require retraining each time, or adjusting, when weights of the objective function are changed
- Besides the warmstart is based on real world data taking into account how moving obstacles act in traffic, but also the road structure etc. (in contrast to other learning-based methods which do not consider moving obstacles at all)
- Another advantage is that it leverages the multimodal predictor and the prior knowledge about homotopy classes to find and compare multiple local minima and selects the best of it. Pure learning-based warmstarts do not provide a comparison of local minima.

The proposed approach may be also implemented in a computer program causing a computer to carry out an embodiment of the proposed approach. Accordingly, embodiments of the method may be a computer-implemented method. The computer program may be stored on any computer-readable data carrier. So, embodiment of the present disclosure may also provide such data carrier.

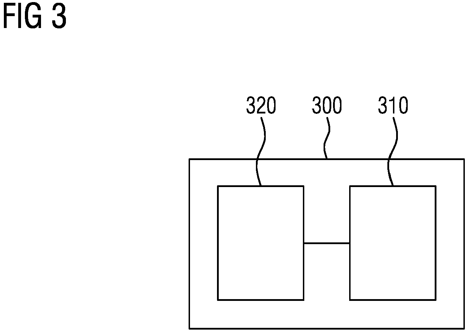

Further, the proposed approach may be implemented in an apparatus, as laid out in more detail below with reference to Fig. 3.

Fig. 3 shows a block diagram schematically illustrating an embodiment of such an apparatus 300. The apparatus comprises one or more interfaces 310 for communication and a data processing circuit 320 configured to execute the proposed method.

In embodiments, the one or more interfaces 310 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 320 may correspond to or comprise any type of programable hardware. So, examples of the data processing circuit 320, e.g., comprise a memory, microcontroller, field programable gate arrays, one or more central, and/or graphical processing units. To execute the proposed method, the data processing circuit 320 may be configured to access or retrieve an appropriate computer program for the execution of the proposed method from a memory of the data processing circuit 320 or a separate memory which is communicatively coupled to the data processing circuit 320.

In practice, the proposed apparatus may be installed on a vehicle. So, embodiments may also provide a vehicle comprising the proposed apparatus. In implementations, the apparatus, e.g., is part or a component of a driving assistance system or (semi-) autonomous driving system..

However, in implementations, computing resources for the vehicle may be outsourced to an external server separate from the vehicle. In such implementations, the proposed approach may be also implemented outside of the vehicle.

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

## Claims

1. A method (100) for motion planning of a vehicle, the method (100) comprising the following steps by the vehicle:
obtaining (110) one or more trajectory candidates of different homotopy classes, wherein trajectory candidates of the same homotopy class can be transformed into each other without intersecting an obstacle;
obtaining (120) an optimization result for the homotopy classes based on respective one or more trajectory candidates; and
selecting (130) an optimization result from the optimization results of the different homotopy classes for maneuvering the vehicle.

2. The method (100) of claim 1, wherein the method (100) further comprises, using the selected optimization result in a subsequent optimization as initial data for warm-starting.

3. The method (100) of claim 1 or 2, wherein obtaining the one or more trajectory candidates of different homotopy classes comprises:
obtaining at least one trajectory candidate for the different homotopy classes; and
generating for the different homotopy classes, based on the trajectory candidate, further trajectory candidates of the same homotopy class.

4. The method (100) of claim 3, wherein obtaining the at least one trajectory candidate comprises:
obtaining waypoints from a multimodal motion predictor for the different homotopy classes;
fitting a Bezier curve on the waypoints for the different homotopy classes;
obtaining a covariance of the Bezier curve; and
generating the at least one trajectory candidate based on the Bezier curve and its covariance.

5. The method (100) of any one of the preceding claims, wherein obtaining the optimization result for the different homotopy classes comprises:
obtaining for the different homotopy classes an average of the respective trajectory candidates;
applying an optimization to the average trajectory candidate to obtain the optimization result; and
determining an objective function value of the average.

6. The method (100) of claim 5, wherein selecting the optimization result comprises selecting the optimization result based on the objective function values of the optimization results of the different homotopy classes.

7. The method (100) of any one of the preceding claims, wherein obtaining one or more trajectory candidates of different homotopy classes comprises using a machine-learning based predictor trained, based on real-world or synthetic training data, to generate the one or more trajectory candidates.

8. A computer program comprising instructions which, when the computer program is executed by a computer, cause the computer to carry out the method (100) of any one of the preceding claims.

9. A computer-readable data carrier having stored thereon the computer program of claim 8.

10. An apparatus (300) comprising:
one or more interfaces (310) for communication; and
a data processing circuit (320) configured to execute the method (100) of any one of the claims 1 to 7.

11. A vehicle comprising the apparatus (300) of claim 10.
